# EUROPÄISCHE PATENTANMELDUNG

(11) **EP 3 330 204 A1**
(43) Veröffentlichungstag der Anmeldung: **06.06.2018**
(21) Anmeldenummer: 17205060.1
(22) Anmeldetag: 04.12.2017
(51) Int. Cl.: B65G 47/91, B65G 49/06

(54) **HANDHABUNGSVORRICHTUNG FÜR EINE GLASPLATTE**

(30) Priorität: 05.12.2016 DE 102016123464; 23.03.2017 DE 102017106309
(71) Anmelder: Bystronic Lenhardt GmbH, 75242 Neuhausen-Hamberg (DE)
(72) Erfinder: Geisert, Tobias, 75181 Pforzheim (DE)
(74) Vertreter: Twelmeier Mommer & Partner

(57) **Zusammenfassung**

Beschrieben wird eine Vorrichtung (1), eingerichtet zur Handhabung einer Glasplatte, mit einer Hebeeinrichtung (2) und einer daran angebrachten Greifeinrichtung (3), welche mittels der Hebeeinrichtung (2) vertikal bewegbar ist und aktivierbare Haftmittel (4) zum Angreifen an einer ebenen Oberfläche der Glasplatte aufweist. Erfindungsgemäß ist vorgesehen, dass die Hebeeinrichtung (2) zwei Profilschienen (11) und einen Laufwagen (9) aufweist; dass die beiden Profilschienen (11) parallel zueinander vertikal angeordnet sind und in Längsrichtung der Profilschienen (11) verlaufende Fahrbahnen (31, 32) aufweisen, entlang derer der Laufwagen (9) verfahrbar ist; dass an dem Laufwagen (9) die Greifeinrichtung (3) und vier Fahrwerke (12) befestigt sind, wobei jeder der Profilschienen (11) zwei der Fahrwerke (12) zugeordnet sind; dass jede Profilschiene (11) einen in Längsrichtung der Profilschiene (11) verlaufenden Laufkanal (16) und einen in Längsrichtung der Profilschiene (11) verlaufenden Schlitz (17) aufweist, über welchen der Laufkanal (16) von außen zugänglich ist; dass jede Profilschiene (11) zwei innere Fahrbahnen (32) und zwei äußere Fahrbahnen (31) aufweist, wobei die beiden inneren Fahrbahnen (32) innerhalb des Laufkanals (16) beiderseits des Schlitzes (17) und die beiden äußeren Fahrbahnen (31) außerhalb des Laufkanals (16) beiderseits des Schlitzes (17) angeordnet sind und wobei auf jeder Seite (a; b) des Schlitzes (17) die dort befindliche äußere Fahrbahn (31) entgegengesetzt zu der dort befindlichen inneren Fahrbahn (32) orientiert ist; dass jedes der Fahrwerke (12) sich durch den Schlitz (17) derjenigen Profilschiene (11), der es zugeordnet ist, erstreckt und wenigstens vier Laufrollen (21, 22) enthält, wobei zumindest zwei der Laufrollen (22) innerhalb des Laufkanals (16) dieser Profilschiene (11) und zumindest zwei der Laufrollen (21) außerhalb des Laufkanals (16) dieser Profilschiene (11) angeordnet sind und wobei auf jeder der Fahrbahnen (31, 32) dieser Profilschiene (11) zumindest eine der Laufrollen (21, 22) läuft.

## Beschreibung

Die Erfindung geht von einer zur Handhabung einer Glasplatte eingerichteten Vorrichtung mit den im Oberbegriff des Anspruchs 1 angegebenen Merkmalen aus, welche eine Hebeeinrichtung mit einer daran angebrachten Greifeinrichtung enthält. Die Greifeinrichtung ist mittels der Hebeeinrichtung vertikal bewegbar und weist aktivierbare Haftmittel zum Angreifen an einer ebenen Oberfläche der Glasplatte auf.

Eine derartige Vorrichtung ist aus der DE 20 2011 100 015 U1 und der DE 20 2011 100 042 U1 bekannt und enthält jeweils eine Hebeeinrichtung, die einen vertikalen Teleskopzylinder mit einer ein- und ausfahrbaren Kolbenstange aufweist. An der Kolbenstange ist eine Greifeinrichtung angebracht. Über die Kolbenstange ist die Greifeinrichtung vertikal bewegbar. Hierzu sind Gleitführungen vorgesehen. Gleichzeitig ist die Greifeinrichtung um die Mittelachse der Kolbenstange drehbar. Die Tragfähigkeit der bekannten Handhabungsvorrichtung und damit auch die handhabbare Größe der Glasplatte sind begrenzt.

In Kenntnis der Erfindung wurden die CH 421 822 A, die DE 10 2010 037 522 A1 und die DE 20 2011 107 001 U1 ermittelt, in welchen jeweils eine Profilschiene mit einem Innenläuferprofil für Hängebahnen, Hängekranträger- und Katzfahrbahnen oder dergleichen offenbart ist. Die bekannten Profilschienen weisen einen in Längsrichtung der Profilschiene verlaufenden Laufkanal und einen in Längsrichtung der Profilschiene verlaufenden Schlitz sowie zwei innere Fahrbahnen auf, welche beiderseits des Schlitzes angeordnet sind. Die bekannten Profilschienen wurden bislang ausschließlich horizontal eingebaut und für Fahrwerke verwendet, welche nur innerhalb des Laufkanals laufende Laufrollen enthalten. Die an den Fahrwerken befestigten Hängebahnen oder Hängekrane belasten das Fahrwerk und die Profilschiene lediglich in einer Richtung, nämlich aufgrund der Gravitationskraft vertikal nach unten. Es treten keine vertikal nach oben gerichteten Kräfte an den Fahrwerken auf. Durch benachbarte Fahrwerke an einer Profilschiene können keine entgegengesetzt zueinander gerichteten Querkräfte in diese Profilschiene eingeleitet werden. Somit findet keine unmittelbare Einleitung von Biegemomenten durch die Fahrwerke statt. Folglich besteht keine Notwendigkeit für weitere Laufrollen und/oder Fahrbahnen an den bekannten Profilschienen. Die bekannten Profilschienen haben deshalb keine äußeren Fahrbahnen und die Fahrwerke haben keine äußeren Laufrollen.

Es hat sich nun gezeigt, dass die in der DE 20 2011 107 001 U1 offenbarten Profilschienen Querschnittsformen aufweisen, welche sich besonders gut für die Verwendung in einer Handhabungsvorrichtung für eine Glasplatte eignen. Die Profilschienen weisen äußere Oberflächen auf, welche entgegengesetzt zu den inneren Fahrbahnen orientiert sind und sich als Laufflächen für äußere Fahrbahnen eignen. Derartige Profilschienen mit einem Innenläuferprofil für Hängebahnen, Hängekranträger- und Katzfahrbahnen können erfindungsgemäß für eine Vorrichtung zur Handhabung einer Glasplatte mit zwei vertikal angeordneten Profilschienen, insbesondere der vorgenannten Art, verwendet werden.

Ferner ist aus der DE 1 658 305 A eine selbsttragende Hängebahnschiene mit innen beiderseits einer unteren Längsöffnung liegenden Katz- und/oder Kran-Fahrbahnen bekannt, welche ein nach unten offenes U-förmiges Dachprofil aufweist, an dessen Flanschen Stege mit nach innen weisenden Laufflächen angeschweißt sind. Die Laufflächen steigen in Richtung Laufschienenmitte leicht nach oben an und bilden obere Flansche von nach außen offenen U-Profilen, deren untere Flansche sich als Laufflächen für Reibräder zum Antrieb der Laufkatzen anbieten. In der DE 10 2012 111 669 A1, der DE 10 2010 022 625 A1 und der DE 60 2004 001 269 T2 sind Handhabungsvorrichtungen offenbart, welche jeweils einen entlang von Profilschienen verfahrbaren Laufwagen enthalten.

Der Erfindung liegt die Aufgabe zugrunde, eine verbesserte Handhabungsvorrichtung der eingangs genannten Art zu schaffen, mit welcher sich größere und schwerere Glasplatten handhaben lassen.

Diese Aufgabe wird durch eine Vorrichtung mit den im Patentanspruch 1 angegebenen Merkmalen gelöst. Vorteilhafte Weiterbildungen der Erfindung sind Gegenstand der Unteransprüche.

Die erfindungsgemäße Vorrichtung ist zur Handhabung einer Glasplatte eingerichtet. Unter dem Begriff "Glasplatte" wird sowohl eine Glastafel oder eine Glasscheibe, beispielsweise eine aus mehreren Glastafeln zusammengesetzte Isolierglasscheibe, als auch ein mehrlagiges Glaspaket, beispielsweise ein laminiertes Glaspaket oder eine Verbundsicherheitsglasscheibe, verstanden. Die erfindungsgemäße Handhabungsvorrichtung enthält eine Hebeeinrichtung und eine daran angebrachte Greifeinrichtung. Die Greifeinrichtung weist aktivierbare Haftmittel zum Angreifen an einer ebenen Oberfläche der Glasplatte auf. Aktivierbare Haftmittel können beispielsweise pneumatische Saugteller, insbesondere Vakuumsaugteller, sein, welche an sich bekannt sind. Mit den aktivierbaren Haftmitteln kann eine, insbesondere ebene, Glasplatte an ihrer Oberfläche gegriffen werden. Die Greifeinrichtung ist mittels der Hebeeinrichtung vertikal bewegbar. Dadurch kann die Glasplatte angehoben, mit der Handhabungsvorrichtung zu einem anderen Ort bewegt und dort wieder abgesetzt werden. Die Greifeinrichtung kann in an sich bekannter Weise auch um eine horizontale Achse schwenkbar an der Hebeeinrichtung angebracht sein, so dass eine liegende oder schräg stehende Glasplatte angehoben und in die Vertikale geschwenkt werden kann. Die Handhabungsvorrichtung kann insbesondere eine Hängefördervorrichtung sein, welche über Längsführungsmittel an einem Ausleger oder einer Schiene in horizontaler Richtung bewegbar, insbesondere verfahrbar, sein kann.

Die Hebeeinrichtung weist zwei Profilschienen und einen Laufwagen auf. Die beiden Profilschienen sind parallel zueinander angeordnet. Ihre Längsrichtung verläuft in vertikaler Richtung. Die unteren Enden der Profilschienen hängen frei und sind nicht abgestützt. Beide Profilschienen weisen in Längsrichtung verlaufende Fahrbahnen auf, entlang derer der Laufwagen verfahrbar ist. An dem Laufwagen sind die Greifeinrichtung und vier Fahrwerke befestigt. Jeder der Profilschienen sind zwei der Fahrwerke zugeordnet. Jede Profilschiene weist einen in Längsrichtung der Profilschiene verlaufenden Laufkanal und einen in Längsrichtung der Profilschiene verlaufenden Schlitz auf, über welchen der Laufkanal von außen zugänglich ist. Der Laufkanal ist ein sich in Längsrichtung erstreckender Hohlraum, welcher von der Profilschiene bis auf den Bereich des Schlitzes umhüllt wird. Jede der Profilschienen weist zwei innere Fahrbahnen und zwei äußere Fahrbahnen auf. Die beiden inneren Fahrbahnen sind innerhalb des Laufkanals beiderseits des Schlitzes angeordnet. Die beiden äußeren Fahrbahnen sind außerhalb des Laufkanals, also an Außenflächen der Profilschiene, beiderseits des Schlitzes angeordnet. Im Querschnitt durch die Profilschiene gesehen bildet der Schlitz somit eine Trennung der Profilschiene, welche sich ununterbrochen in Längsrichtung der Profilschiene erstreckt. Im Querschnitt durch die Profilschiene gesehen ist auf jeder Seite des Schlitzes eine innere und eine äußere Fahrbahn angeordnet. Auf jeder Seite des Schlitzes ist die dort befindliche äußere Fahrbahn entgegengesetzt zu der dort befindlichen inneren Fahrbahn orientiert. Die inneren Fahrbahnen sind somit mit ihren Laufflächen entgegengesetzt zu den Laufflächen der äußeren Fahrbahnen ausgerichtet.

Jedes der Fahrwerke erstreckt sich durch den Schlitz derjenigen Profilschiene, der es zugeordnet ist. Jedes der Fahrwerke enthält wenigstens vier Laufrollen, wobei zumindest zwei der Laufrollen innerhalb des Laufkanals dieser Profilschiene ("innere Laufrollen") und zumindest zwei der Laufrollen außerhalb des Laufkanals dieser Profilschiene ("äußere Laufrollen") angeordnet sind und wobei auf jeder der vier Fahrbahnen dieser Profilschiene zumindest eine der Laufrollen läuft.

Die Erfindung hat folgende wesentliche Vorteile:
- Die erfindungsgemäße Handhabungsvorrichtung weist eine hohe Stabilität und Tragfähigkeit auf. Sie ist insbesondere geeignet, um große und schwere Glasplatten, beispielsweise mit Abmessungen von 6 m Länge und 3,5 m Breite und einem Gewicht von 1.000 kg anzuheben und zu bewegen.
- Die erfindungsgemäße Handhabungsvorrichtung ist durch die teilweise innerhalb des Laufkanals der Profilschiene angeordneten Laufrollen platzsparend und kompakt.
- Aufgrund der Profilschienen weist die Handhabungsvorrichtung ein geringes Eigengewicht auf.
- Die auf den Fahrbahnen laufenden Laufrollen gewährleisten eine präzise und leichtgängige Führung des Laufwagens, insbesondere auch bei hohen Gewichten der Glasplatte, und lassen sich einfach justieren. Durch die einander entgegengesetzt orientierten inneren und äußeren Fahrbahnen kann eine stabile Führung des Laufwagens erreicht werden. Die äußeren, außerhalb der Profilschiene befindlichen Laufrollen sind für Einstellarbeiten sehr gut zugänglich. Die Laufrollen lassen sich dadurch praktisch spielfrei an die Fahrbahnen anlegen, so dass eine sehr hohe Präzision der Führung gewährleistet ist.
- Die inneren und äußeren Laufrollen zweier benachbarter Fahrwerke einer Profilschiene ermöglichen eine gute Einleitung von entgegengesetzt zueinander gerichteten Querkräften in diese Profilschiene. Dadurch kann die Last der Glasplatte ohne große Reibungsverluste vom Laufwagen auf die Profilschienen übertragen werden.
- Bei der Handhabung von Glasplatten sind Stöße und ruckartige Belastungen zu vermeiden, da Glasplatten dadurch sehr leicht Risse bekommen oder sogar brechen können. Durch die erfindungsgemäße Ausgestaltung der Profilschienen lässt sich ein besonders guter Kompromiss bezüglich sich widersprechender Eigenschaften erreichen. Einerseits wird eine ausreichende Steifigkeit der Profilschienen sichergestellt, um auch schwere Glasplatten handhaben zu können. Gleichzeitig ist jedoch auch eine gewisse Elastizität und Nachgiebigkeit der Profilschienen, und damit der gesamten Hebeeinrichtung, gewährleistet, um Schwingungen und Stöße zu absorbieren, welche sich bei der Handhabung und Bewegung der Glasplatte nicht immer gänzlich vermeiden lassen.
- Die erfindungsgemäße Vorrichtung zur Handhabung einer Glasplatte lässt sich einfach herstellen. Sie ist ferner langlebig und wenig wartungsintensiv.

In Ausgestaltung der Erfindung kann die Vorrichtung zwei identische Profilschienen enthalten. Jede Profilschiene kann bezüglich des Schlitzes ein im Querschnitt spiegelsymmetrisches Profil aufweisen. Insbesondere verlaufen die Profilschienen geradlinig. Jede Profilschiene kann zwei U-förmige Profilabschnitte aufweisen, welche beiderseits des Schlitzes angeordnet sind. Jeder U-förmige Profilabschnitt kann zwei Schenkel enthalten, an welchen jeweils eine der inneren Fahrbahnen und eine der äußeren Fahrbahnen angeordnet ist. Jeder U-förmige Profilabschnitt kann einen seine beiden Schenkel verbindenden Verbindungsabschnitt enthalten. Die beiden Verbindungsabschnitte einer Profilschiene begrenzen den Schlitz dieser Profilschiene auf seinen beiden Seiten. Für die Verwendung in einer erfindungsgemäßen Handhabungsvorrichtung für eine Glasplatte ist insbesondere eine Profilschiene geeignet, welche zwei beiderseits des Schlitzes angeordnete Schenkel aufweist, welche sich als äußere Fahrbahnen eignen. Die U-förmigen Profilabschnitte bieten den Fahrbahnen aufgrund ihrer Form eine gewisse Nachgiebigkeit. Eine derartige Form der Profilschiene kann besonders vorteilhaft bezüglich des oben bereits erwähnten Kompromisses zwischen einer ausreichenden Steifigkeit der Profilschiene und einer gewissen Nachgiebigkeit zum Absorbieren von Schwingungen und Stößen sein.

In weiterer Ausgestaltung kann die auf einer Seite des Schlitzes befindliche innere Fahrbahn zu der auf derselben Seite des Schlitzes befindlichen äußeren Fahrbahn einen Abstand aufweisen, welcher sich mit zunehmender Entfernung vom Schlitz vergrößert. Die Fahrbahnen können somit leicht schräg zueinander angeordnet sein. Dabei können die Fahrbahnen - im Querschnitt durch die Profilschiene gesehen - eben oder leicht gewölbt, insbesondere konkav gewölbt, sein. Die vier Fahrbahnen können ähnlich eines "X" schräg zueinander orientiert sein. Die X-förmige Orientierung der Fahrbahnen kann eine besonders stabile Abstützung des Fahrwerks an der Profilschiene ermöglichen. Die Außenkontur jeder Laufrolle kann an die Kontur der ihr zugeordneten Fahrbahn angepasst sein. Insbesondere können die Achsen der Laufrollen parallel zueinander verlaufen.

In weiterer Ausgestaltung kann vorgesehen sein, dass an jedem Fahrwerk der Abstand zwischen den den äußeren Fahrbahnen zugeordneten Laufrollen und den den inneren Fahrbahnen zugeordneten Laufrollen, also der Abstand zwischen den äußeren und den inneren Laufrollen, einstellbar ist. Insbesondere kann jeder äußeren Laufrolle ein Exzenter zugeordnet sein, über welchen der Abstand dieser äußeren Laufrolle zu der ihr zugeordneten inneren Laufrolle veränderbar ist. Die Einstellung der äußeren Laufrollen ist aufgrund ihrer guten Zugänglichkeit einfach möglich, so dass ein praktisch spielfreier Lauf des Fahrwerks an der Profilschiene sehr einfach ermöglicht werden kann.

Insbesondere kann vorgesehen sein, dass jedes Fahrwerk einen Fahrwerkskörper aufweist, welcher über ein Gelenk mit dem Laufwagen verbunden ist. Dies kann insbesondere dann vorteilhaft sein, wenn das Fahrwerk mehr als vier Laufrollen, insbesondere acht Laufrollen, von denen vier innere Laufrollen und vier äußere Laufrollen sind, aufweist. Das Fahrwerk kann während der Verfahrbewegung über das Gelenk eine leichte Pendelbewegung zum Ausgleich von Toleranzen ausführen.

Weitere Vorteile und Merkmale der Erfindung ergeben sich aus der nachfolgenden Beschreibung eines Ausführungsbeispiels in Verbindung mit den Figuren. Es zeigen:
- Figur 1: eine perspektivische Darstellung einer erfindungsgemäßen Handhabungsvorrichtung,

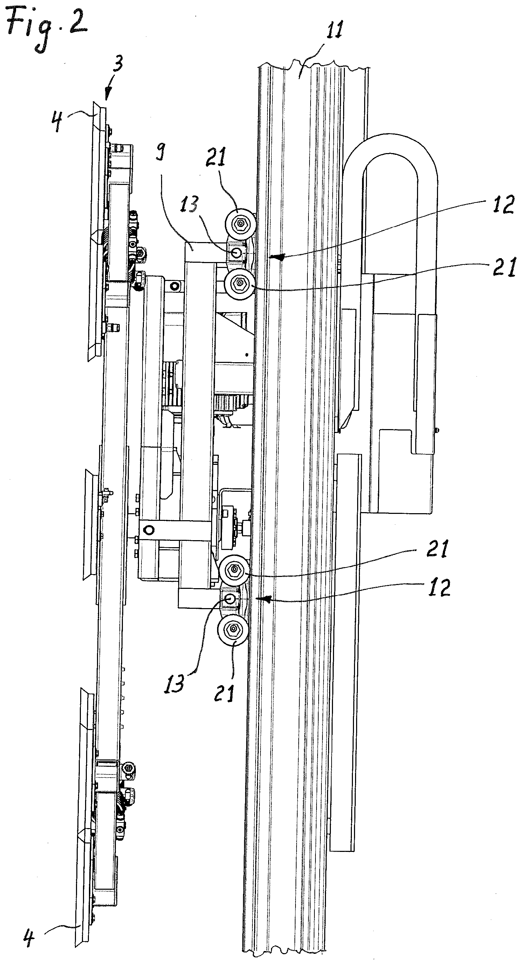

- Figur 2: einen Ausschnitt einer Seitenansicht auf die Handhabungsvorrichtung in Richtung des Pfeiles II der Figur 1,
- Figur 3: eine teilweise geschnittene Darstellung der Handhabungsvorrichtung in Richtung des Pfeils III der Figur 1,
- Figur 4: einen Querschnitt durch eine vertikale Profilschiene der Handhabungsvorrichtung der Figur 1,
- Figur 5: eine perspektivische Darstellung eines Fahrwerks der Handhabungsvorrichtung der Figur 1.

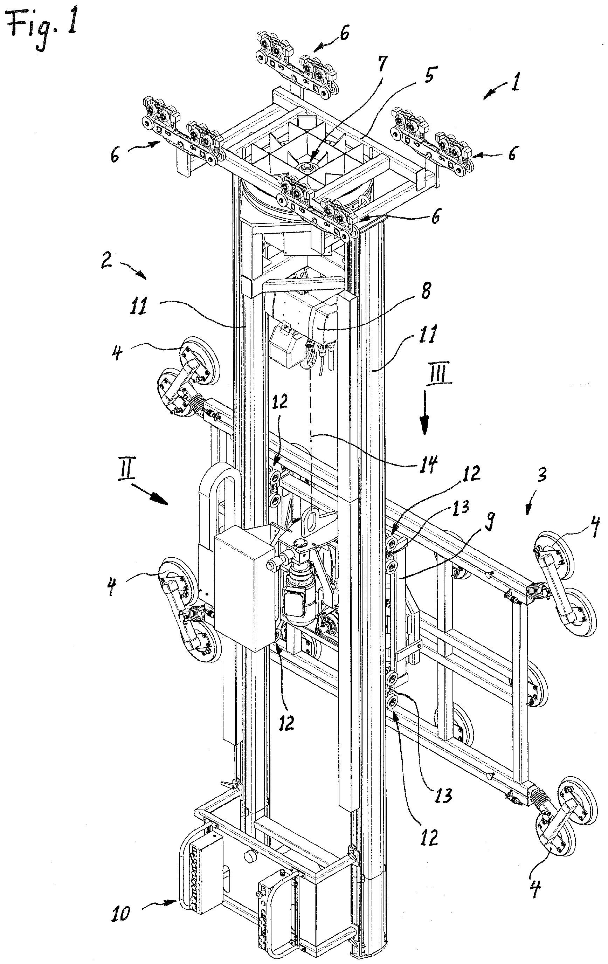

Figur 1 zeigt eine Vorrichtung 1 zur Handhabung einer Glasplatte. Die Handhabungsvorrichtung 1 enthält eine Hebeeinrichtung 2 und eine daran angebrachte Greifeinrichtung 3. Die Greifeinrichtung 3 ist mit aktivierbaren Haftmitteln 4 in Form von pneumatisch betätigbaren Saugtellern ausgestattet, um an einer ebenen Oberfläche der Glasplatte anzugreifen und diese anzuheben. Zur besseren Übersicht ist eine solche Glasplatte in den Figuren nicht dargestellt. Die Vorrichtung 1 enthält ein Fahrgestell 5 mit Fahrwerken 6, welche in nicht dargestellten, horizontal angeordneten Schienen verfahrbar sind. Die Schienen für die Fahrwerke 6 sind etwa 6 m oberhalb des Fußbodens angebracht. Die Hebeeinrichtung 2 ist über ein Drehgelenk 7, welches eine vertikale Drehachse aufweist, mit dem Fahrgestell 5 verbunden. Die Hebeeinrichtung 2 weist einen Hubantrieb 8, einen Laufwagen 9, eine Bedieneinheit 10 und zwei vertikal angeordnete Profilschienen 11 auf. Die Bedieneinheit 10 ist unbeweglich an den unteren Enden der Profilschienen 11 befestigt. An dem Laufwagen 9 sind vier Fahrwerke 12 jeweils über ein Gelenk 13 befestigt. Die vier Fahrwerke 12 und die beiden Profilschienen 11 sind jeweils gleich ausgebildet. Der Laufwagen 9 ist mittels des Hubantriebs 8 in Längsrichtung der Profilschienen 11 verfahrbar. Der Hubantrieb 8 enthält hierzu einen Kettenzug mit einer gestrichelt angedeuteten Kette 14, welche in dem Laufwagen 9 eingehängt ist.

Zur Handhabung von Glasplatten mit Abmessungen von 6 m x 3,5 m kann die Länge der Profilschienen 11 im Bereich von 4,5 m bis 5 m liegen. Über die Bedieneinheit 10 kann eine Bedienperson die Vorrichtung 1 steuern. Die Bedienperson kann beispielsweise die Vorrichtung 1 mit den Haftmitteln 4 zu einer stehenden Glasplatte steuern, die Haftmittel 4 auf die Oberfläche der Glasplatte aufsetzen und aktivieren und anschließend die Glasplatte über die Hebeeinrichtung 2 anheben. Über das Drehgelenk 7 kann die angehobene Glasplatte gedreht werden. Die Handhabungsvorrichtung 1 kann über die Fahrwerke 6 an eine andere Stelle verfahren werden, um die Glasplatte dort abzusetzen. Derartige Handhabungsvorrichtungen werden insbesondere bei der Herstellung von Verbundsicherheitsglas oder Isolierglasscheiben eingesetzt.

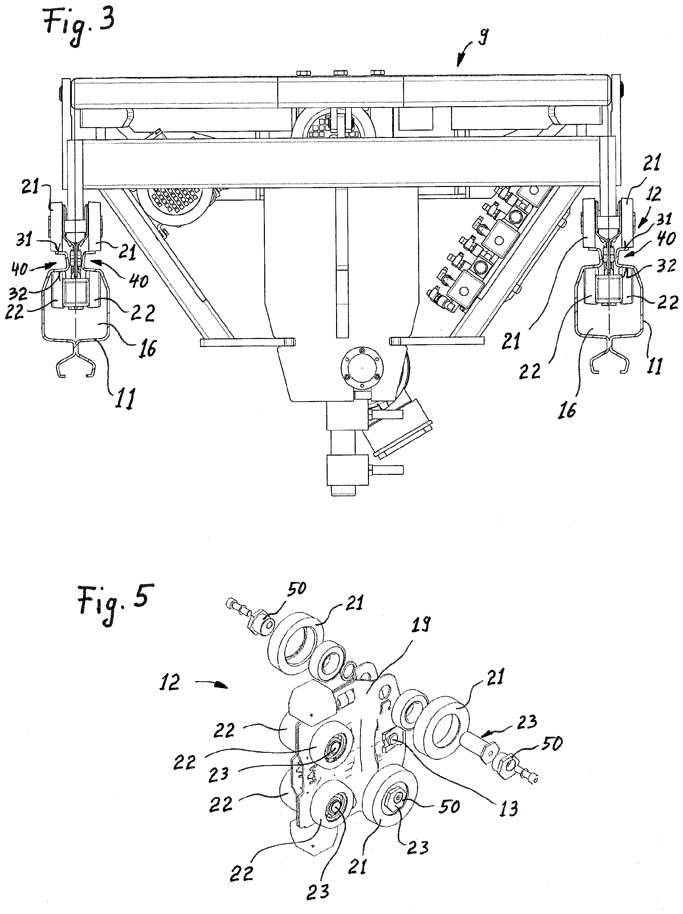

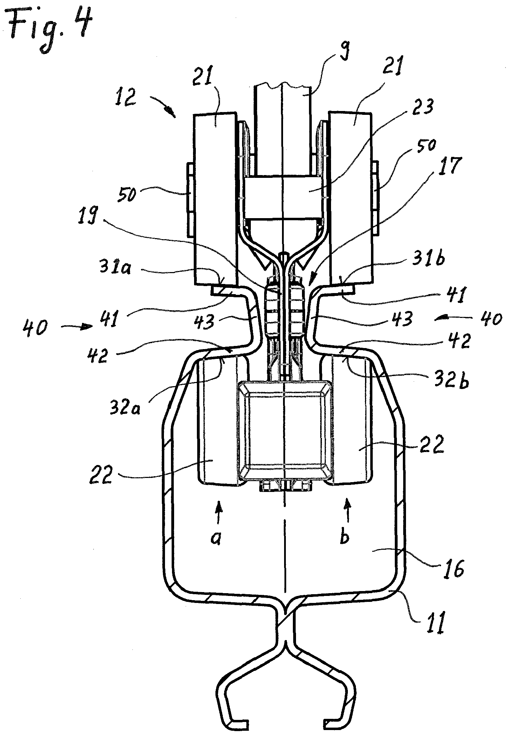

Jede Profilschiene 11 enthält einen in Längsrichtung der Profilschiene 11 verlaufenden Laufkanal 16 und einen in Längsrichtung der Profilschiene 11 verlaufenden Schlitz 17, siehe insbesondere Figuren 3 und 4. Über den Schlitz 17 ist der Laufkanal von außen zugänglich. Jedes Fahrwerk 12 enthält einen insbesondere in Figur 5 erkennbaren Fahrwerkskörper 19, welcher sich aus dem Inneren des Laufkanals 16 durch den Schlitz 17 nach außen erstreckt und dort über das Gelenk 13 mit dem Laufwagen 9 gekoppelt ist. Jedes Fahrwerk 12 enthält vier äußere Laufrollen 21 und vier innere Laufrollen 22. Jede der Laufrollen 21, 22 ist frei drehbar auf einer am Fahrwerkskörper 19 befestigten Achse 23, siehe insbesondere Figur 5, angeordnet.

Jede Profilschiene 11 weist zwei äußere Fahrbahnen 31 und zwei innere Fahrbahnen 32 auf, siehe insbesondere Figur 4. Die beiden inneren Fahrbahnen 31 sind beiderseits des Schlitzes 17 innerhalb des Laufkanals 16 angeordnet. Die beiden äußeren Fahrbahnen 32 sind außerhalb des Laufkanals 16 beiderseits des Schlitzes 17 angeordnet. In Figur 4 sind die auf einer Seite a des Schlitzes befindlichen Fahrbahnen 31, 32 als 31a und 32a bezeichnet. Die auf der anderen Seite b des Schlitzes 17 angeordneten Fahrbahnen 31, 32 sind mit 31b und 32b bezeichnet. Die äußere Fahrbahn 31a ist entgegengesetzt zu der inneren Fahrbahn 32a orientiert. Die äußere Fahrbahn 31b ist entgegengesetzt zu der inneren Fahrbahn 32b orientiert. Auf jeder der Fahrbahnen 31 und 32 laufen zwei in Längsrichtung der Profilschiene 11 hintereinander angeordnete Laufrollen 21, 22 eines Fahrwerks 12.

Jede Profilschiene 11 weist zwei U-förmige Profilabschnitte 40 auf, welche beiderseits des Schlitzes 17 angeordnet sind. Jeder Profilabschnitt 40 enthält zwei Schenkel 41 und 42 und einen Verbindungsabschnitt 43, welcher die beiden Schenkel 41 und 42 verbindet. Die beiden Verbindungsabschnitte 43 einer Profilschiene 11 begrenzen den Schlitz 17 dieser Profilschiene, siehe insbesondere Figur 4. An jedem Schenkel 41 ist eine äußere Fahrbahn 31 und an jedem Schenkel 42 eine innere Fahrbahn 32 angeordnet. Die U-förmigen Profilabschnitte 40 ermöglichen bei Belastung durch die Laufrollen 21, 22 eine gewisse Nachgiebigkeit der Profilschienen 11, um eventuell auftretende Schwingungen und Stöße zu absorbieren.

Die auf einer Seite a des Schlitzes 17 befindliche innere Fahrbahn 32a weist zu der auf derselben Seite a des Schlitzes 17 befindlichen äußeren Fahrbahn 31a einen Abstand auf, welcher sich mit zunehmender Entfernung vom Schlitz 17 vergrößert, siehe insbesondere Figur 4. Die Fahrbahnen 31a und 32a sind deshalb leicht schräg zueinander angeordnet. Die Profilschiene 11 ist bezüglich einer durch den Schlitz 17 verlaufenden Ebene spiegelsymmetrisch ausgestaltet. Die auf der anderen Seite b angeordneten Fahrbahnen 31b und 32b sind in gleicher Weise schräg zueinander angeordnet. Dadurch ergibt sich eine etwa X-förmige Anordnung der vier Fahrbahnen 31a, 31b, 32a und 32b, welche eine gute Führungsstabilität für das Fahrwerk 12 bietet. Die Achsen 23 der Laufrollen 21, 22 sind parallel zueinander und die Außenkonturen der Laufrollen 21, 22 sind an die schrägen Fahrbahnen 31, 32 angepasst. Die Laufrollen 21, 22 können aus Aluminium bestehen und mit einer verschleißfesten Beschichtung versehen sein. Jeder äußeren Laufrolle 21 ist ein Exzenter 50 zugeordnet, siehe insbesondere Figur 5. Über den Exzenter 50 ist der Abstand der äußeren Laufrolle 21 zu der auf derselben Seite a bzw. b (siehe Figur 4) befindlichen inneren Laufrolle 22 einstellbar. Dadurch lässt sich eine praktisch spielfreie Führung des Laufwagens 9 auf seiner Profilschiene 11 erreichen.

### Bezugszeichenliste

- 1: Vorrichtung
- 2: Hebeeinrichtung
- 3: Greifeinrichtung
- 4: Haftmittel
- 5: Fahrgestell
- 6: Fahrwerk
- 7: Drehgelenk
- 8: Hubantrieb
- 9: Laufwagen
- 10: Bedieneinheit
- 11: Profilschiene
- 12: Fahrwerk
- 13: Gelenk
- 14: Kette
- 16: Laufkanal
- 17: Schlitz
- 19: Fahrwerkskörper
- 21: äußere Laufrolle
- 22: innere Laufrolle
- 23: Achse
- 31: äußere Fahrbahn
- 32: innere Fahrbahn
- 40: U-förmiger Profilabschnitt
- 41: Schenkel
- 42: Schenkel
- 43: Verbindungsabschnitt
- 50: Exzenter

- a: Seite
- b: Seite

## Patentansprüche

1. Vorrichtung (1), eingerichtet zur Handhabung einer Glasplatte, mit einer Hebeeinrichtung (2) und einer daran angebrachten Greifeinrichtung (3), welche mittels der Hebeeinrichtung (2) vertikal bewegbar ist und aktivierbare Haftmittel (4) zum Angreifen an einer ebenen Oberfläche der Glasplatte aufweist,
**dadurch gekennzeichnet,**
**dass** die Hebeeinrichtung (2) zwei Profilschienen (11) und einen Laufwagen (9) aufweist;
**dass** die beiden Profilschienen (11) parallel zueinander vertikal angeordnet sind und in Längsrichtung der Profilschienen (11) verlaufende Fahrbahnen (31, 32) aufweisen, entlang derer der Laufwagen (9) verfahrbar ist;
**dass** an dem Laufwagen (9) die Greifeinrichtung (3) und vier Fahrwerke (12) befestigt sind, wobei jeder der Profilschienen (11) zwei der Fahrwerke (12) zugeordnet sind;
**dass** jede Profilschiene (11) einen in Längsrichtung der Profilschiene (11) verlaufenden Laufkanal (16) und einen in Längsrichtung der Profilschiene (11) verlaufenden Schlitz (17) aufweist, über welchen der Laufkanal (16) von außen zugänglich ist;
**dass** jede Profilschiene (11) zwei innere Fahrbahnen (32) und zwei äußere Fahrbahnen (31) aufweist, wobei die beiden inneren Fahrbahnen (32) innerhalb des Laufkanals (16) beiderseits des Schlitzes (17) und die beiden äußeren Fahrbahnen (31) außerhalb des Laufkanals (16) beiderseits des Schlitzes (17) angeordnet sind und wobei auf jeder Seite (a; b) des Schlitzes (17) die dort befindliche äußere Fahrbahn (31) entgegengesetzt zu der dort befindlichen inneren Fahrbahn (32) orientiert ist;
**dass** jedes der Fahrwerke (12) sich durch den Schlitz (17) derjenigen Profilschiene (11), der es zugeordnet ist, erstreckt und wenigstens vier Laufrollen (21, 22) enthält, wobei zumindest zwei der Laufrollen (22) innerhalb des Laufkanals (16) dieser Profilschiene (11) und zumindest zwei der Laufrollen (21) außerhalb des Laufkanals (16) dieser Profilschiene (11) angeordnet sind und wobei auf jeder der Fahrbahnen (31, 32) dieser Profilschiene (11) zumindest eine der Laufrollen (21, 22) läuft.

2. Vorrichtung nach Anspruch 1, in welcher jede Profilschiene (11) zwei U-förmige Profilabschnitte (40) aufweist, welche beiderseits des Schlitzes (17) angeordnet sind, wobei jeder U-förmige Profilabschnitt (40) zwei Schenkel (41, 42) enthält, an welchen jeweils eine der inneren Fahrbahnen (32) und eine der äußeren Fahrbahnen (31) angeordnet ist.

3. Vorrichtung nach Anspruch 2, in welcher jeder U-förmige Profilabschnitt (40) einen seine beiden Schenkel (41, 42) verbindenden Verbindungsabschnitt (43) enthält, wobei die beiden Verbindungsabschnitte (43) einer Profilschiene (11) den Schlitz (17) dieser Profilschiene (11) begrenzen.

4. Vorrichtung nach einem der vorstehenden Ansprüche, in welcher jedes Fahrwerk (12) einen Fahrwerkskörper (19) aufweist, welcher über ein Gelenk (13) mit dem Laufwagen (9) verbunden ist.

5. Vorrichtung nach einem der vorstehenden Ansprüche, in welcher an jedem Fahrwerk (12) der Abstand zwischen den den äußeren Fahrbahnen (31) zugeordneten Laufrollen (21) und den den inneren Fahrbahnen (32) zugeordneten Laufrollen (22) einstellbar ist.

6. Vorrichtung nach einem der vorstehenden Ansprüche, in welcher die auf einer Seite (a) des Schlitzes (17) befindliche innere Fahrbahn (32a) zu der auf derselben Seite (a) des Schlitzes (17) befindlichen äußeren Fahrbahn (31a) einen Abstand aufweist, welcher sich mit zunehmender Entfernung vom Schlitz (17) vergrößert.

7. Vorrichtung nach Anspruch 6, in welcher die Außenkontur jeder Laufrolle (21, 22) an die Kontur der ihr zugeordneten Fahrbahn (31, 32) angepasst ist, wobei die Achsen (23) der Laufrollen (21, 22) parallel zueinander verlaufen.
